# EUROPEAN PATENT APPLICATION

(11) **EP 4 738 313 A1**
(43) Date of publication of application: **06.05.2026**
(21) Application number: 25185880.9
(22) Date of filing: 27.06.2025
(51) Int. Cl.: G08G 5/22, G08G 5/26, G08G 5/53, G08G 5/55, G08G 5/56, G08G 5/57, G08G 5/72, G08G 5/80

(54) **SERVER AND METHOD FOR MANAGING AIR TRAFFIC**

(30) Priority: 31.10.2024 KR 20240152947
(71) Applicant: Hyundai Motor Company, Seoul 06797 (KR); Kia Corporation, Seoul 06797 (KR)
(72) Inventor: LIM, Jun Young, 18280 Hwaseong-si, Gyeonggido (KR)
(74) Representative: Viering, Jentschura & Partner mbB Patent- und Rechtsanwälte

(57) **Abstract**

A server may comprise a communication circuit configured to communicate with a mobility apparatus and an external computing device configured to control the mobility apparatus via a wireless communication network, a memory configured to register a mobility apparatus identification code obtained from the external computing device, and a processor circuit configured to process data received from the mobility apparatus and the external computing device to generate control data, receive a communication connection request for transmitting and receiving flight data for at least one mobility apparatus, identify, based on the mobility apparatus identification code, the mobility apparatus, establish communication with the mobility apparatus and the external computing device to enable control of the mobility apparatus via the wireless communication network, receive flight data from the mobility apparatus at a predetermined period, and monitor the mobility apparatus based on the received flight

## Description

### CROSS-REFERENCE TO RELATED APPLICATION

This application claims the benefit of priority to Korean Patent Application No. 10-2024-0152947, filed in the Korean Intellectual Property Office on October 31, 2024, the entire contents of which are incorporated herein by reference.

### TECHNICAL FIELD

The present disclosure relates to a server and a method for managing air traffic using a commercial communication network, and more particularly, relates to technologies for controlling a manned mobility apparatus and an unmanned mobility apparatus via a server connected with the commercial communication network.

### BACKGROUND

The matters described in this Background section are only for enhancement of understanding of the background of the disclosure, and should not be taken as acknowledgment that they correspond to prior art already known to those skilled in the art.

A service using an unmanned mobility apparatus has expanded in various industry fields, such as logistics and delivery, image capturing and broadcasting, agriculture, security and monitoring, construction, and infrastructure inspection.

There is risk of a collision, if a manned mobility apparatus and an unmanned mobility apparatus (e.g., a drone or the like) share the same airspace. Thus, an integrated control technology for managing two types of aircrafts to safely avoid each other via integrated control is considered.

### SUMMARY

The present disclosure has been made to solve the above-mentioned problems.

According to the present disclosure, a server may comprise a communication circuit configured to communicate with a mobility apparatus and an external computing device configured to control the mobility apparatus via a wireless communication network, a memory configured to register a mobility apparatus identification code obtained from the external computing device, and a processor circuit configured to, process data received from the mobility apparatus and the external computing device to generate control data, receive a communication connection request for transmitting and receiving flight data for at least one mobility apparatus, identify, based on the mobility apparatus identification code, the mobility apparatus, establish communication with the mobility apparatus and the external computing device to enable control of the mobility apparatus via the wireless communication network, receive flight data from the mobility apparatus at a predetermined period, and monitor, based on the received flight data, the mobility apparatus.

The server, wherein the processor circuit is configured to, determine an occurrence of a flight event from the flight data, and identify whether the flight event is included in a control manual.

The server, wherein the processor circuit is configured to, based on the flight event being included in the control manual, request additional flight data from the mobility apparatus.

The server, wherein the processor circuit is configured to, process the additional flight data, and transmit, based on the processed additional flight data, control manual data to the mobility apparatus.

The server, wherein the processor circuit is configured to, based on the flight event not being included in the control manual, request control command data from the external computing device.

The server, wherein the processor circuit is configured to, receive the control command data from the external computing device, and transmit the received control command data to the mobility apparatus.

The server, wherein the processor circuit is configured to, determine an occurrence of a control request event from the flight data, and request, based on the determined occurrence of the control request event, control command data from the external computing device.

The server, wherein the processor circuit is configured to, receive the control command data from the external computing device, and transmit the received control command data to the mobility apparatus.

The server, wherein the processor circuit is configured to, determine an occurrence of a flight end event from the flight data and store the flight data in the memory, and transmit, based on the determined occurrence of the flight end event, a control end message to the mobility apparatus and the external computing device.

The server, wherein the processor circuit is configured to, extract, from the memory, flight route data for a plurality of mobility apparatuses that are currently flying, and generate an expected location map of the plurality of mobility apparatuses at predetermined time periods.

The server, wherein the processor circuit is configured to, based on the expected location map, detect that the plurality of mobility apparatuses are approaching within a predetermined separation distance in a specific time period, and transmit a collision warning message to the external computing device for controlling the plurality of mobility apparatuses.

The server, wherein the processor circuit is configured to, based on the expected location map, detect that one mobility apparatus is approaching within a predetermined distance from an obstacle in a specific time period, and transmit an obstacle warning message to the external computing device for controlling the one mobility apparatus.

According to the present disclosure, a method performed by a server, the method may comprise registering, in a memory, a mobility apparatus identification code obtained from an external computing device, receiving a communication connection request for transmitting and receiving flight data for at least one mobility apparatus, identifying, based on the mobility apparatus identification code, the mobility apparatus, establishing communication between the server, the mobility apparatus, and the external computing device via a wireless communication network to enable control of the mobility apparatus, receiving flight data from the mobility apparatus at a predetermined period, and monitoring, based on the received flight data, the mobility apparatus.

The method may further comprise determining an occurrence of a flight event from the flight data, and identifying whether the flight event is included in a control manual.

The method may further comprise based on the flight event being included in the control manual, requesting additional flight data from the mobility apparatus.

The method may further comprise processing the additional flight data, and transmitting, based on the processed additional flight data, control manual data to the mobility apparatus.

The method may further comprise based on the flight event not being included in the control manual, requesting control command data from the external computing device.

According to the present disclosure, a mobility apparatus may comprise a processor, and a memory storing at least one instruction that, when executed by the processor communicating with the memory, is configured to cause the mobility apparatus to, establish communication with a server and an external computing device via a wireless communication network, generate flight data associated with operation of the mobility apparatus, transmit the flight data to the server at a predetermined interval, receive control data from the server, wherein the control data is generated based on the transmitted flight data and additional flight data from at least one other mobility apparatus, adjust, based on the received control data, at least one operational parameter of the mobility apparatus, and control, based on the adjusted at least one operational parameter, a flight operation of the mobility apparatus.

The mobility apparatus, wherein the at least one instruction, when executed by the processor communicating with the memory, is configured to cause the mobility apparatus to, based on degraded communication performance between the mobility apparatus and the server, establish communication with the external computing device to receive control command data from the external computing device.

The mobility apparatus, wherein the at least one instruction, when executed by the processor communicating with the memory, is configured to cause the mobility apparatus to generate the flight data based on output from a sensor, and wherein the sensor is configured to detect at least one of a location, posture, velocity, angular velocity, or environmental condition associated with the mobility apparatus.

### BRIEF DESCRIPTION OF THE DRAWINGS

The above and other objects, features and advantages of the present disclosure will be more apparent from the following detailed description taken in conjunction with the accompanying drawings:
FIG. 1 shows an example of a configuration of a system for managing air traffic according to an example of the present disclosure;
FIG. 2 shows an example of a server according to an example of the present disclosure;
FIG. 3 shows an example of a detailed configuration of a server, a mobility apparatus, and a controller according to an example of the present disclosure;
FIG. 4 shows an example of a storage module of a server according to an example of the present disclosure;
FIG. 5 shows an example of a server according to another example of the present disclosure;
FIG. 6 shows an example of transmitting and receiving data with a controller and a mobility apparatus in a server according to an example of the present disclosure;
FIG. 7 shows another example of transmitting and receiving data with a controller and a mobility apparatus in a server according to an example of the present disclosure;
FIG. 8 shows an example of a method for managing air traffic in a server according to an example of the present disclosure;
FIG. 9 shows an example of a method for managing air traffic in a server according to another example of the present disclosure;
FIG. 10 shows an example of a method for managing air traffic in a server according to another example of the present disclosure;
FIG. 11 shows an example of a method for managing air traffic in a server according to another example of the present disclosure;
FIG. 12 shows an example of a method for managing air traffic in a server according to another example of the present disclosure;
FIG. 13 shows an example of a method for managing air traffic in a server according to another example of the present disclosure; and
FIG. 14 shows an example of a method for managing air traffic in a server according to another example of the present disclosure.
FIG. 15 shows an example computing system (e.g., a computing device of mobility apparatuses or any other apparatus).

### DETAILED DESCRIPTION

Hereinafter, some examples of the present disclosure will be described in detail with reference to the exemplary drawings. In adding the reference numerals to the components of each drawing, it should be noted that the identical component is designated by the identical numerals even when they are displayed on other drawings. Further, in describing the example of the present disclosure, a detailed description of well-known features or functions will be ruled out in order not to unnecessarily obscure the gist of the present disclosure.

In describing the components of the example of the present disclosure, terms such as first, second, "A", "B", (a), (b), and the like may be used. These terms are only used to distinguish one component from another component, but do not limit the corresponding components irrespective of the order or priority of the corresponding components. Furthermore, unless otherwise defined, all terms including technical and scientific terms used herein have the same meaning as being generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

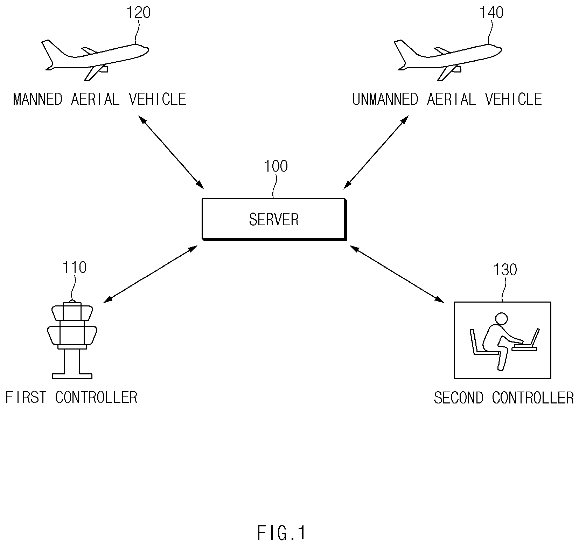

Hereinafter, examples of the present disclosure will be described in detail with reference to FIGS. 1 to 14.

FIG. 1 shows an example of a configuration of a system for managing air traffic according to an example of the present disclosure.

Referring to FIG. 1, the system for managing air traffic, according to an example of the present disclosure, may be composed of a server 100 for managing air traffic using a commercial or public wireless communication network, and mobility apparatuses 120 and 140 and controllers 110 and 130 in communication with the server 100 using the commercial or public wireless communication network (e.g., 4G, 5G, or satellite networks, etc.).

A network for communication within among the mobility apparatus 120 and 140, the controllers 110 and 130, and the server 100 may include both a wired network and a wireless network, which may be collectively referred to as a communication network for supporting various communication specifications and protocols for pairing and/or data transmission and reception among the mobility apparatus 120 and 140, the controllers 110 and 130, and the server 100 (e.g., data sync, remote control signals, or flight coordination data, etc.).

Such a wired/wireless network may include all communication networks which are currently supported or will be supported in the future by the specification and may support all of one or more communication protocols for them (e.g., TCP/IP, MQTT, or HTTPS, etc.).

For example, the wired/wireless network may be formed by a network for a wired connection, such as a universal serial bus (USB), a composite video blanking sync (CVBS), a component, an S-video (analog), a digital visual interface (DVI), a high definition multimedia interface (HDMI), RGB, or D-SUB, and a communication specification and protocol for it, or a network for a wireless connection, such as Bluetooth, radio frequency identification (RFID), infrared data association (IrDA), ultra wideband (UWB), ZigBee, digital living network alliance (DLNA), wireless LAN (WLAN) (Wi-Fi), wireless broadband (WiBro), world interoperability for microwave access (WiMAX), high speed downlink packet access (HSDPA), long term evolution/ long term evolution-advanced (LTE/LTE-A), or Wi-Fi Direct, and a communication specification and protocol for it (e.g., IEEE 802.11, 802.15.4, or 3GPP protocols, etc.).

The server 100 may receive a communication connection request for transmitting and receiving flight data for at least one mobility apparatus (120, 140), may identify the mobility apparatus 120 and 140 using identification codes of the mobility apparatus **(e.g., an aircraft, a drone, or a remotely piloted vehicle, etc.)** 120 and 140, may be in communication with the mobility apparatus 120 and 140 and the controllers 110 and 130 responsible for controlling the mobility apparatus 120 and 140 using the commercial or public wireless communication network, may receive flight data at a predetermined period from the mobility apparatus 120 and 140, and may monitor the mobility apparatus 120 and 140 using the flight data.

The mobility apparatus may include the manned mobility apparatus 120 and the unmanned mobility apparatus 140 (e.g., a passenger aircraft and an autonomous drone, respectively, etc.).

The controllers may include the first controller 110 for controlling the manned mobility apparatus 120 and the second controller 130 for controlling the unmanned mobility apparatus 140.

The controllers 110 and 130 may store the identification codes for the mobility apparatus 120 and 140 in the server 100 at least one day before the flight begins.

If registering the identification codes of the mobility apparatus 120 and 140, the controllers 110 and 130 may access a storage module of the server 100 to register a mobility apparatus unique identification number, an access port, and a password (e.g., 128-bit hashed credentials, dynamic access ports, or OTP-authenticated keys, etc.).

At this time, the mobility apparatus unique identification number, the access port, and the password may be stored in a preassigned slot in a flight database included in the storage module of the server 100.

The server 100 may be in communication with the controllers 110 and 130 and the mobility apparatus 120 and 140 over the commercial communication network. The commercial communication network may include 4th generation (4G), 5th generation (5G), NB-IoT, or a satellite communication network (e.g., Starlink, etc.).

The mobility apparatus 120 and 140 may be in communication with the server 100 and may continuously transmit flight data to the server 100, while the mobility apparatus 120 and 140 are in flight.

The flight data may include at least one of location data, posture data, velocity data, angular velocity data, or sensing data (e.g., GPS coordinates, orientation angles, acceleration metrics, or onboard diagnostic sensor outputs, etc.).

The server 100 may determine the occurrence of a flight event from the flight data and may identify whether the flight event is included in a control manual (e.g., a predefined instruction set, decision tree, or rule-based response table, etc.).

If the flight event is included in the control manual, the server 100 may request additional flight data according to the control manual from the mobility apparatus 120 and 140 (e.g., enhanced sensor readings, diagnostic logs, or navigation metrics, etc.).

The server 100 may analyze the additional flight data and may transmit control manual data corresponding to the analyzed result to the mobility apparatus 120 and 140.

The server 100 may check whether the flight event has ended at a predetermined period.

At this time, if it is checked that the flight event does not end, the server 100 may request control command data from the controllers 110 and 130 (e.g., manual override instructions, emergency response actions, or adjusted flight parameters, etc.).

The server 100 may receive the control command data from the controllers 110 and 130 and may transmit the received control command data to the mobility apparatus 120 and 140.

If it is determined that the flight event ends, the server 100 may proceed with monitoring again.

If the flight event is not included in the control manual, the server 100 may request control command data from the controllers 110 and 130 (e.g., emergency landing instructions, real-time course correction data, or pilot intervention signals, etc.).

The server 100 may receive the control command data from the controllers 110 and 130 and may transmit the received control command data to the mobility apparatus 120 and 140.

The server 100 may check whether the flight event ends within the predetermined period.

If it is determined that the flight event does not end, the server 100 may request additional control command data from the controllers 110 and 130.

The server 100 may receive the additional control command data from the controllers 110 and 130 and may transmit the received additional control command data to the mobility apparatus 120 and 140.

If it is determined that the flight event ends, the server 100 may proceed with monitoring again.

The server 100 may determine an occurrence of a control request event from the flight data and may request control command data from the controllers 110 and 130 (e.g., remote mission update requests, manual override prompts, or unexpected route deviation handling, etc.).

The server 100 may receive the control command data from the controllers 110 and 130 and may transmit the received control command data to the mobility apparatus 120 and 140.

The server 100 may check whether the control request event ends within the predetermined period.

If it is determined that the control request event ends, the server 100 may proceed with monitoring again.

Furthermore, the server 100 may determine an occurrence of a flight end event from the flight data, may store all pieces of flight data received from the mobility apparatus 120 and 140 in the storage module of the server 100, and may transmit a control end message to the mobility apparatus 120 and 140 and the controllers 110 and 130 (e.g., to archive logs, release network resources, or close control sessions, etc.).

The server 100 may determine an obstacle detection event from the flight data and may change a period when the flight data is received to be shorter (e.g., increasing from 1 Hz to 10 Hz for higher temporal resolution, etc.).

The server 100 may access a database in the storage module and may check whether there is obstacle data corresponding to the obstacle detection event in the database (e.g., terrain maps, no-fly zones, or restricted airspace data, etc.).

If there is the obstacle data, the server 100 may transmit control manual data corresponding to the obstacle data to the mobility apparatus 120 and 140. At this time, the server 100 may transmit control manual data for the unmanned mobility apparatus 140 to the second controller 130.

If there is no obstacle data, the server 100 may read out obstacle data via a pre-trained deep learning model stored in the storage module and may transmit control manual data corresponding to the retrieved obstacle data to the mobility apparatus 120 and 140 (e.g., rerouting commands, altitude adjustments, or collision avoidance instructions, etc.).

If there is no obstacle data, the server 100 may request control command data from the controllers 110 and 130, may receive the control command data from the controllers 110 and 130, and may transmit the received control command data to the mobility apparatus 120 and 140 (e.g., new path vectors, emergency maneuver commands, or altitude adjustments, etc.).

If there is no obstacle data, the server 100 may in one-to-one communication with the mobility apparatus 120 and 140 and the controllers 110 and 130 and may request the controllers 110 and 130 to transmit the control command data corresponding to the obstacle detection event to the mobility apparatus 120 and 140. At this time, the manned mobility apparatus 120 may be in communication with the first controller 110 and the second controller 130 may be in communication with the second controller 130.

The server 100 may extract flight route data for all mobility apparatus which are currently flying from the storage module and may generate an expected location map of all the mobility apparatus at intervals of a predetermined time (e.g., every 1 second, 10 seconds, or 1 minute, etc.).

Furthermore, the server 100 may detect a plurality of mobility apparatuses approaching within a predetermined separation distance in a specific time in response to the expected location map and may transmit a collision warning message to a controller for controlling the plurality of mobility apparatuses (e.g., automated deconfliction, rerouting commands, or deceleration prompts, etc.).

Furthermore, the server 100 may detect the mobility apparatus 120 and 140 approaching within a predetermined distance from an obstacle in a specific time in response to the expected location map and may transmit an obstacle warning message to the controllers 110 and 130 for controlling the mobility apparatus 120 and 140 (e.g., terrain collision warning, no-fly zone alert, or proximity alarm, etc.).

The server 100 may receive piloting information data for all the mobility apparatus 120 and 140 in real time and may determine whether the mobility apparatus 120 and 140 move to correspond to predetermined flight route data in real time (e.g., checking for deviation in path curvature, altitude profile, or speed profile, etc.).

The piloting information data may include x-axis data, y-axis data, z-axis data, roll data, pitch data, and yaw data (e.g., representing position in 3D space and attitude orientation for stability control and prediction, etc.).

If communication connection performance with the mobility apparatus 120 and 140 is less than a threshold, the server 100 may estimate the piloting information data (e.g., in the event of latency spikes, link loss, or degraded signal strength, etc.).

If estimating the piloting information data, the server 100 may apply an inverse dynamics algorithm based on state information data of the mobility apparatus 120 and 140 for each time unit, which is included in the flight data, and may estimate the piloting information data (e.g., estimating velocity or attitude from inertial sensor readings and prior control outputs, etc.).

If estimating the piloting information data, the server 100 may estimate the piloting information data using a pre-trained deep learning model using a type of the mobility apparatus, flight route trajectory information, and state information for each time (e.g., RNN-based motion prediction for fixed-wing drones, or CNN-based scene classification for obstacle context, etc.).

The server 100 may monitor its communication connection performance (e.g., packet loss rate, signal-to-noise ratio, or jitter analysis, etc.).

If monitoring the communication connection performance, the server 100 may evaluate signal availability, a signal delay, and signal performance (e.g., latency in uplink/downlink, throughput efficiency, or failover readiness, etc.).

Furthermore, if monitoring the communication connection performance, the server 100 may monitor a first communication connection performance between a communication module and the mobility apparatus 120 and 140 and a second communication connection performance between the communication module and the controllers 110 and 130 (e.g., based on latency, signal strength, or error rate, etc.).

If at least one of the first communication connection performance or the second communication connection performance is less than or equal to the threshold, the server 100 may control to perform a one-to-one communication connection between the mobility apparatus 120 and 140 and the controllers 110 and 130 (e.g., direct fallback channel for critical command routing, etc.).

The server 100 may monitor the first communication connection performance and the second communication connection performance and may control to end the one-to-one communication connection between the mobility apparatus 120 and 140 and the controllers 110 and 130, if the first communication connection performance and the second communication connection performance are both greater than the threshold. At this time, the server 100 may be in communication with the mobility apparatus 120 and 140 and the controllers 110 and 130 at the same time (e.g., resuming centralized multiparty coordination, etc.).

If at least one of the first communication connection performance or the second communication connection performance is less than or equal to the threshold, the server 100 may switch the communication connection to a preliminary wireless network module to perform a continuous communication connection (e.g., switching from 5G to satellite backup or Wi-Fi fallback, etc.).

Furthermore, the server 100 may analyze flight data using a pre-trained obstacle prediction deep learning model and may determine a potential obstacle occurrence event within a predetermined time (e.g., 2 to 5 seconds into the future, etc.).

At this time, a potential obstacle may be at least one of another mobility apparatus, natural topography, or a geofence for avoiding a predictable collision on a flight route (e.g., hills, buildings, restricted air corridors, or other in-flight vehicles, etc.).

The server 100 may determine whether the potential obstacle occurrence event corresponds to a piloting change condition (e.g., predefined triggers requiring evasive maneuvers, path rerouting, or flight mode switching, etc.).

If the potential obstacle occurrence event corresponds to the piloting change condition, the server 100 may transmit control command data corresponding to the piloting change condition to the mobility apparatus (e.g., lateral path shift, altitude change, or deceleration order, etc.).

The control command data corresponding to the piloting change condition may include changed flight route data (e.g., an alternative waypoint list, rerouted trajectory map, or revised target coordinates, etc.).

If the potential obstacle occurrence event does not correspond to the piloting change condition, the server 100 may transmit a message for instructing to maintain flight along the current flight route (e.g., continue as planned without deviation, maintain altitude and heading, etc.) to the mobility apparatus 120 and 140 and may proceed with monitoring the mobility apparatus 120 and 140 again.

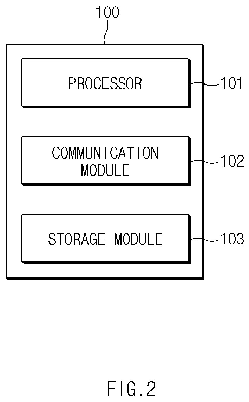

FIG. 2 shows an example of a server according to an example of the present disclosure.

As shown in FIG. 2, a server 100 may include a communication module 102 configured to communicate with a mobility apparatus and a controller using a commercial communication network, a storage module 103 for registering a mobility apparatus identification code obtained from the controller, and a processor 101 for analyzing data received from the mobility apparatus and the controller to generate control data (e.g., flight instructions, override signals, or warning notifications, etc.).

At this time, the processor 101 may include a security module and a monitoring module. The security module and the monitoring module may be separately constructed in the server 100 (e.g., implemented as distinct firmware units or dedicated functional blocks, etc.).

The processor 101 may be a central processing unit (CPU) or a semiconductor device for processing instructions stored in a memory and/or the storage module 103. Each of the memory and the storage module 103 may include various types of volatile or nonvolatile storage media. For example, the memory may include a read only memory (ROM) and a random access memory (RAM) , or both **(e.g., DRAM, SRAM, EEPROM, or flash-based modules, etc.).**

Accordingly, the operations of the method or algorithm described in connection with the examples disclosed in the specification may be directly implemented with a hardware module, a software module, or a combination of the hardware module and the software module, which is executed by the processor 101. The software module may reside on a storage medium (i.e., the memory and/or the storage module 103) such as a RAM, a flash memory, a ROM, an EPROM, an EEPROM, a register, a hard disc, a removable disk, and a CD-ROM (e.g., to enable firmware execution, data caching, or temporary buffer allocation, etc.).

The exemplary storage medium may be coupled to the processor 101. The processor 101 may read out information from the storage medium and may write information in the storage medium. Alternatively, the storage medium may be integrated with the processor 101. The processor 101 and the storage medium may reside in an application specific integrated circuit (ASIC). The ASIC may reside within a user terminal. In another case, the processor 101 and the storage medium may reside in the user terminal as separate components (e.g., on separate chips or within a multi-chip module, etc.).

Furthermore, the communication module 102 of the server 100 may include a wireless Internet module, a short range communication module, a location information module, or the like (e.g., GPS receiver, cellular modem, or IoT radio interface, etc.).

The wireless Internet module may refer to a module for wireless Internet access, which is configured to transmit and receive a wireless signal in a communication network according to wireless Internet technologies (e.g., to enable cloud connectivity, data streaming, or OTA updates, etc.).

The wireless Internet technology may be, for example, a wireless LAN (WLAN), wireless-fidelity (Wi-Fi), Wi-Fi Direct, digital living network alliance (DLNA), wireless broadband (WiBro), world interoperability for microwave access (WiMAX), high speed downlink packet access (HSDPA), high speed uplink packet access (HSUPA), long term evolution (LTE), long term evolution-advanced (LTE-A), or the like. The wireless Internet module may transmit and receive data depending on at least one wireless Internet technology in the range including an Internet technology which is not listed above (e.g., 5G NR, NB-IoT, or LoRaWAN, etc.).

From the point of view of performing the wireless Internet access by WiBro, HSDPA, HSUPA, GSM, CDMA, WCDMA, LTE, LTE-A, or the like over a mobile communication network, the wireless Internet module for performing the wireless Internet access over the mobile communication network may be understood as a kind of the mobile communication module (e.g., supporting both circuit-switched and packet-switched data transport, etc.).

The short range communication module may be for short range communication, which may support short range communication, using at least one of Bluetooth^{™}, radio frequency identification (RFID), infrared data association (IrDA), ultra wideband (UWB), ZigBee, near field communication (NFC), wireless-fidelity (Wi-Fi), Wi-Fi Direct, and wireless universal serial bus (USB) technologies (e.g., for device pairing, vehicle-to-device interaction, or local diagnostics upload, etc.).

The processor 101 may receive a communication connection request for transmitting and receiving flight data for at least one mobility apparatus, may identify the mobility apparatus using an mobility apparatus identification code, may be in communication with the mobility apparatus and a controller for controlling the mobility apparatus using the commercial communication network, may receive the flight data at a predetermined period from the mobility apparatus, and may monitor the mobility apparatus using the flight data (e.g., altitude tracking, navigation correction, or anomaly detection, etc.).

At this time, the mobility apparatus may include a manned mobility apparatus and an unmanned mobility apparatus (e.g., a piloted aircraft and a drone, respectively, etc.). The controller may include a first controller for controlling the manned mobility apparatus and a second controller for controlling the unmanned mobility apparatus.

At this time, if registering the mobility apparatus identification code, the controller may access the storage module 103 to register a mobility apparatus unique identification number, an access port, and a password (e.g., encrypted access key, network port number, or authentication credential, etc.).

The mobility apparatus unique identification number, the access port, and the password may be stored in a **preassigned** slot in a flight database included in the storage module 103.

The commercial communication network may include 4G, 5G, or NB-IoT, a satellite communication network (e.g., Starlink, etc.).

The flight data may include at least one of location data, posture data, velocity data, angular velocity data, or sensing data (e.g., GPS coordinates, IMU readings, speed vectors, or environmental sensor outputs, etc.).

The processor 101 may determine an occurrence of a flight event from the flight data and may identify whether the flight event is included in a control manual (e.g., turbulence, route deviation, or altitude drop, etc.).

If the flight event is included in the control manual, the processor 101 may request additional flight data according to the control manual from the mobility apparatus (e.g., airspeed, battery status, or altitude rate, etc.).

Furthermore, the processor 101 may analyze the additional flight data and may transmit control manual data corresponding to the analyzed result to the mobility apparatus.

The processor 101 may determine whether the flight event ends within a predetermined period (e.g., based on a timeout threshold or event completion status, etc.).

If it is determined that the flight event does not end, the processor 101 may request control command data from the controller.

The processor 101 may receive the control command data from the controller and may transmit the received control command data to the mobility apparatus (e.g., reroute instruction, altitude change, or speed adjustment, etc.).

If it is determined that the flight event has ended, the processor 101 may proceed with monitoring again.

If the flight event is not included in the control manual, the processor 101 may request control command data from the controller.

The processor 101 may receive the control command data from the controller and may transmit the received control command data to the mobility apparatus.

The processor 101 may determine whether the flight event ends within the predetermined period.

If it is determined that the flight event has not ended, the processor 101 may request additional control command data from the controller (e.g., updated flight plan, emergency halt, or system diagnostics, etc.).

The processor 101 may receive the additional control command data from the controller and may transmit the received additional control command data to the mobility apparatus.

If it is determined that the flight event has ended, the processor 101 may proceed with monitoring again.

The processor 101 may determine an occurrence of a control request event from the flight data and may request control command data from the controller (e.g., due to system anomaly, weather-related deviation, or loss of autonomy, etc.).

Herein, the processor 101 may receive the control command data from the controller and may transmit the received control command data to the mobility apparatus (e.g., to adjust route, engage manual override, or change altitude, etc.).

The processor 101 may determine whether the control request event has ended within the predetermined period.

Herein, if it is determined that the control request event has ended, the processor 101 may proceed with monitoring again.

The processor 101 may determine an occurrence of a flight end event from the flight data, may store all pieces of flight data received from the mobility apparatus in the storage module 103 of the server 100, and may transmit a control end message to the mobility apparatus and the controller e.g., to indicate mission termination, start post-flight analysis, or release network session, etc.).

The processor 101 may determine an obstacle detection event from the flight data and may change the predetermined period at which the flight data is received to be shorter (e.g., increasing sampling rate from 1 Hz to 10 Hz, etc.).

Herein, the processor 101 may access a database in the storage module 103 and may determine whether there is obstacle data corresponding to the obstacle detection event in the database (e.g., previously mapped terrain, static object data, or restricted zone entries, etc.).

If there is matching obstacle data, the processor 101 may transmit control manual data corresponding to the obstacle data to the mobility apparatus.

As another example, if there is no obstacle data, the processor 101 may read out obstacle data via a pre-trained deep learning model stored in the storage module 103 and may transmit control manual data corresponding to the retrieved obstacle data to the mobility apparatus e.g., suggested altitude adjustment or new trajectory path, etc.).

As another example, if there is no obstacle data, the processor 101 may request control command data from the controller, may receive the control command data from the controller, and may transmit the received control command data to the mobility apparatus.

As another example, if there is no obstacle data, the processor 101 may establish one-to-one communication with the mobility apparatus and the controller and may request the controller to transmit control command data corresponding to the obstacle detection event to the mobility apparatus.

Furthermore, the processor 101 may extract flight route data for all mobility apparatus which are currently flying from the storage module 103 and may generate an expected location map of all the mobility apparatus at intervals of a predetermined time (e.g., every 2 seconds, 10 seconds, or real-time updates, etc.).

Herein, the processor 101 may detect a plurality of mobility apparatuses approaching within a predetermined separation distance in a specific time in response to the expected location map and may transmit a collision warning message to a controller for controlling the plurality of mobility apparatuses **(e.g., to initiate route divergence, deceleration, or holding patterns, etc.).**

As another example, the processor 101 may detect a mobility apparatus approaching within a predetermined distance from an obstacle in a specific time in response to the expected location map and may transmit an obstacle warning message to a controller for controlling the mobility apparatus (e.g., proximity alert for terrain, buildings, or restricted zones, etc.).

Furthermore, the processor 101 may receive piloting information data for all the mobility apparatus in real time and may determine whether the mobility apparatus moves to correspond to predetermined flight route data in real time (e.g., checking for heading deviations, missed waypoints, or timing anomalies, etc.).

The piloting information data may include x-axis data, y-axis data, z-axis data, roll data, pitch data, and yaw data (e.g., position in 3D space and orientation for flight stabilization and navigation, etc.).

Herein, if communication connection performance with the mobility apparatus is less than a threshold, the processor 101 may estimate the piloting information data (e.g., due to signal loss, delay, or jitter, etc.).

Herein, if estimating the piloting information data, the processor 101 may apply an inverse dynamics algorithm based on state information data of the mobility apparatus for each time unit, which is included in the flight data, to estimate the piloting information data (e.g., reconstructing motion trajectory based on control inputs and dynamics model, etc.).

Furthermore, if estimating the piloting information data, the processor 101 may estimate the piloting information data using a pre-trained deep learning model using a type of the mobility apparatus, flight route trajectory information, and state information for each time (e.g., predicting next position using LSTM or CNN models trained on historical flight data, etc.).

The processor 101 may monitor communication connection performance of the server 100 (e.g., to detect degradation, instability, or failover conditions, etc.).

If monitoring the communication connection performance of the server 100, the processor 101 may evaluate signal availability, a signal delay, and signal performance (e.g., SNR, RTT, throughput, or packet error rate, etc.).

When monitoring the communication connection performance of the server 100, the processor 101 may monitor a first communication connection performance between the communication module 102 and the mobility apparatus and a second communication connection performance between the communication module 102 and the controller.

Herein, if at least one of the first communication connection performance or the second communication connection performance is less than or equal to a threshold, the processor 101 may control to perform a one-to-one communication connection between the mobility apparatus and the controller (e.g., fallback to direct peer-to-peer channel for critical response, etc.).

Herein, the processor 101 may monitor the first communication connection performance and the second communication connection performance and may control to end the one-to-one communication connection between the mobility apparatus and the controller, if the first communication connection performance and the second communication connection performance are both greater than the threshold (e.g., resuming centralized coordination via the server, etc.).

As another example, if at least one of the first communication connection performance or the second communication connection performance is less than or equal to the threshold, the processor 101 may switch the communication connection to a preliminary wireless network module to perform a continuous communication connection (e.g., transitioning from 5G to satellite link or Wi-Fi failover, etc.).

The processor 101 may analyze flight data using a pre-trained obstacle prediction deep learning model and may determine a potential obstacle occurrence event within a predetermined time (e.g., in the next 5 seconds or next projected waypoint, etc.).

A potential obstacle may be at least one of another mobility apparatus, natural topography, or a geofence (e.g., restricted airspace, predefined no-fly zones, or safety corridors, etc.) for avoiding a predictable collision on a flight route.

Herein, the processor 101 may determine whether the potential obstacle occurrence event corresponds to a piloting change condition e.g., flight path deviation, altitude shift, or emergency rerouting requirement, etc.).

If the potential obstacle occurrence event corresponds to the piloting change condition, the processor 101 may transmit control command data corresponding to the piloting change condition to the mobility apparatus (e.g., evasive maneuver command, detour waypoint set, or speed adjustment, etc.).

The control command data corresponding to the piloting change condition may include changed flight route data (e.g., an updated path vector, a new destination waypoint, or an altitude ceiling/floor adjustment, etc.).

Herein, if the potential obstacle occurrence event does not correspond to the piloting change condition, the processor 101 may transmit a message for instructing to maintain flight as it is along the current flight route to the mobility apparatus and may proceed with monitoring of the mobility apparatus again.

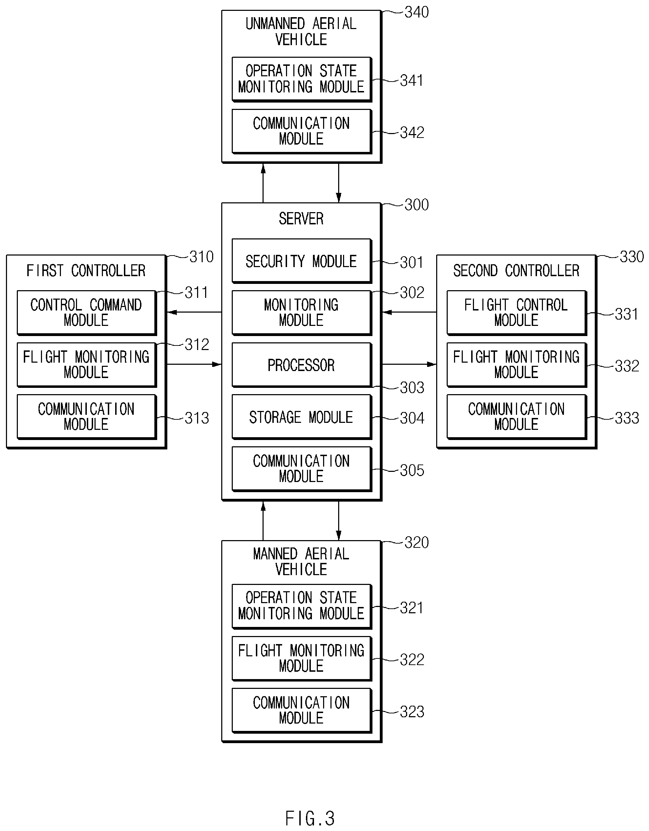

FIG. 3 shows an example of a detailed configuration of a server, a mobility apparatus, and a controller according to an example of the present disclosure (e.g., outlining module interconnections and data flow pathways, etc.).

A server 300 may include a security module 301, a monitoring module 302, a processor 303, a storage module 304, and a communication module 305 (e.g., implemented via integrated hardware or as virtualized services, etc.).

The security module 301 may check whether a mobility apparatus ID, a password, a server port, or the like is identical to previously stored data and may determine whether it is possible to communicatively access a server from the outside. The data, such as the mobility apparatus ID, the password, and the server port, may be stored in the storage module 304 in advance at least one day before flights of mobility apparatus 320 and 340 initiate by controllers 310 and 330 (e.g., for authentication handshake, port binding, or access control validation, etc.).

The monitoring module 302 may be a module for monitoring a current flight operation state, which may receive all pieces of data for flight monitoring necessary for mobility apparatus control, for example, a current status in units of a flight operation schedule, a current location, an altitude, a speed, and sensor data, from the manned mobility apparatus 320 and the unmanned mobility apparatus 340. The received data may be used to compare with a previously stored scheduled flight operation/control schedule to monitor a mobility apparatus state and continuously check whether anything unusual occurs. Such data may be read from the first controller 310 or the second controller 330 if necessary.

If the monitoring module 302 checks whether anything unusual occurs or control is required in the manned mobility apparatus 320 and the unmanned mobility apparatus 340, the data may be delivered to the processor 303. At this time, the processor 303 may transmit control information to the manned mobility apparatus 320 and the unmanned mobility apparatus 340 depending on a previously stored manual. If there is no unusual condition or control request item in the manual, the processor 303 may receive control command data from the controllers 310 and 330 for controlling corresponding mobility apparatus and may transmit the received control command data to the manned mobility apparatus 320 and the unmanned mobility apparatus 340 (e.g., in real-time based on ground operator decisions, emergency overrides, or custom flight plans, etc.).

The storage module 304 may store pieces of information necessary in the security module 301 in advance. Both interrupt data generated by the processor 303 and flight monitoring-related data received by the monitoring module 302 may be stored in the storage module 304. Furthermore, all pieces of the stored data may be automatically deleted after a predetermined time elapses (e.g., 24 hours, 7 days, or a user-defined retention policy, etc.).

The communication module 305 may be in communication with communication modules 313 and 333 included in the controllers 310 and 330 and communication modules 323 and 342 included in the mobility apparatus 320 and 340 over the commercial communication network (e.g., 4G, 5G, or satellite communication, etc.).

The first controller 310 may include a control command module 311, a flight monitoring module 312, and the communication module 313.

The control command module 311 may process a command of a controller as data depending on the control command data requested from the processor 303 of the server 300 and may transmit the data to the server 300 (e.g., manual override signal, emergency landing request, or flight redirection input, etc.).

The flight monitoring module 312 may receive pieces of control information of the manned mobility apparatus 320 and the unmanned mobility apparatus 340, which are currently flying, from the monitoring module 302 of the server 300 and may display the received pieces of control information to the controller (e.g., position, altitude, or error status, etc.).

The manned mobility apparatus 320 may include an operation state monitoring module 321, a flight monitoring module 322, and the communication module 323. The unmanned mobility apparatus 340 may include an operation state monitoring module 341 and the communication module 342.

The operation state monitoring modules 321 and 341 may play the same role as the monitoring module 302 of the server 300. The operation state monitoring modules 321 and 341 may receive control command data to perform a command depending on a predetermined manual, if anything unusual occurs or upon a situation needing control or may transmit corresponding state information to the flight monitoring modules 312 and 332 of the controllers 310 and 330 for taking charge of control, if there is no manual (e.g., fallback to human decision-making in undefined scenarios, etc.).

The second controller 330 may include a flight control module 331, the flight monitoring module 332, and the communication module 333.

If a remote pilot gives a command to the unmanned mobility apparatus 340, the flight control module 331 may process the command as control command data and may transmit the control command data (e.g., a takeoff instruction, altitude adjustment, or route update, etc.).

The flight monitoring module 332 may perform the same function as the flight monitoring module 312 of the first controller 310 and may display data capable of controlling the unmanned mobility apparatus 340 to be checked (e.g., viewed and monitored) by the remote pilot.

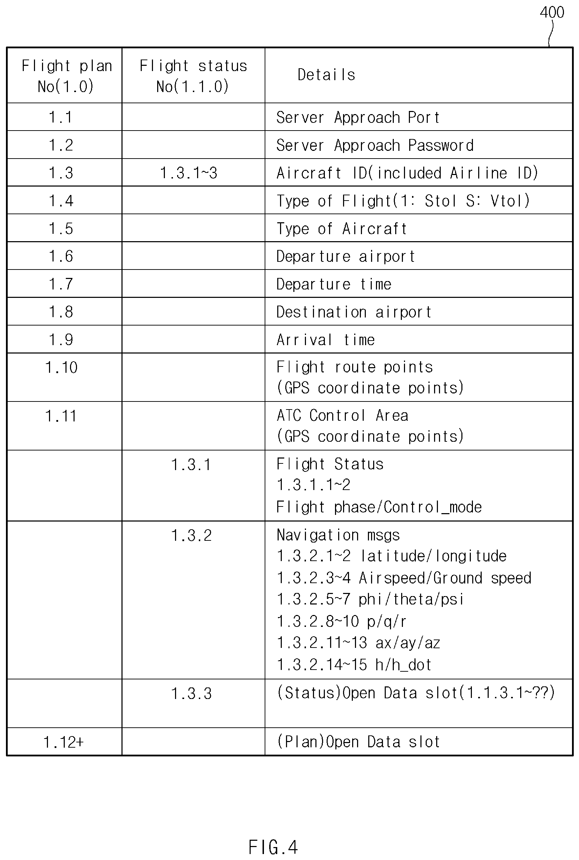

FIG. 4 shows an example of a storage module of a server according to an example of the present disclosure.

The storage module of the server according to an example of the present disclosure may store a database 400 in the form of a data table.

The database 400 may store flight plan data from "1.1" to "1.11" and may be relevant data for an operator to use a server (e.g., authentication, access control, flight scheduling, etc.).

"1.1" and "1.2" among the pieces of data may be registered in a controller at least one day before flight initiates. The operator may share the pieces of data (e.g., with other authorized users or systems, etc.).

The operator may access the server via the pieces of data "1.1" and "1.2" and may register the remaining pieces of data corresponding to data from "1.3" to "1.11".

At this time, the controller and the operator may input additional data for a flight plan to a slot after "1.12" if necessary (e.g., weather condition overrides, maintenance notes, or custom flight constraints, etc.).

If the flight starts, the storage module and a mobility apparatus may transmit and receive flight data with each other. At this time, the data transmission and reception period may be 1 Hz. The flight data may be updated and stored from "1.3.1" to "1.3.3" by receiving existing flight plan data.

Data from "1.3.1" to "1.3.2" may be relevant data which should be stored if transmitting flight data. "1.3.3" may be a slot in which the controller and the operator may specify and store a flight status except for the relevant data, which may input additional data if necessary, at anytime.

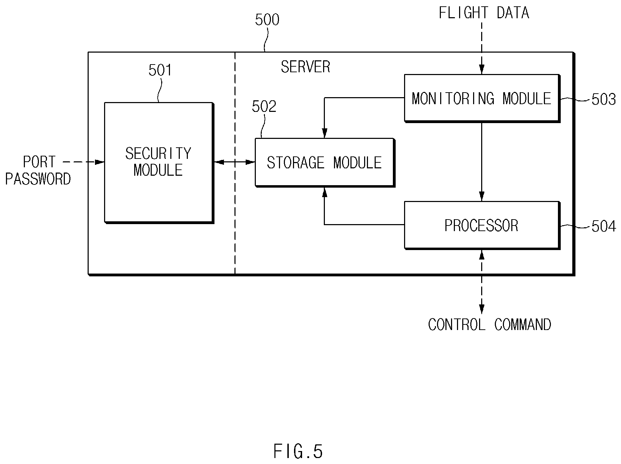

FIG. 5 shows an example of a server according to another example of the present disclosure.

A server 500 may include a security module 501, a storage module 502, a monitoring module 503, and a processor 504.

For an external controller and a mobility apparatus to access the server 500, an authentication process may be required in the security module 501. If the external controller and the mobility apparatus access the server 500, the security module 501 may receive a previously specified port and a password from the outside. The security module 501 may access the storage module 502 and may determine whether there is flight plan data with the identical port and password. Herein, the security module 501 may receive a port and a password from the storage module 502. The storage module 502 may transmit the flight plan data to the security module 501 based on the received port and password. Furthermore, the controller may have a master access right of the security module 501. The controller may access the server 500 using a master port and a master password (e.g., for administrative control or system override, etc.).

Before a flight starts, the monitoring module 503 may obtain flight plan data information which accesses the server 500 from the storage module 502. The monitoring module 503 may be a module for monitoring a current flight operation status, which may store flight data transmitted from the outside in the storage module 502 (e.g., location, altitude, or performance metrics, etc.).

If anything unusual occurs, the processor 504 may store control command data, control processing data, or the like received from the outside, such as the controller, in the storage module 502. At this time, the storage period may be ranged from 1 Hz to 1 time/minute, which may be specified by a user according to the performance of the storage module 502 and the server 500.

If the monitoring module 503 detects an abnormal condition or the mobility apparatus requires a control command, the processor 504 may transmit and receive data related to the abnormal condition (e.g., alert acknowledgment, routing updates, or fallback instructions, etc.).

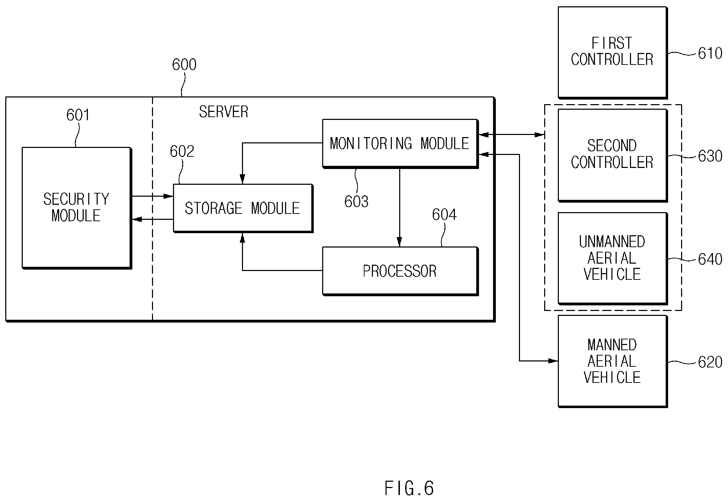

FIG. 6 shows an example of transmitting and receiving data with a controller and a mobility apparatus in a server according to an example of the present disclosure.

A server 600 may include a security module 601, a storage module 602, a monitoring module 603, and a processor 604. The server 600 may be in communication with a first controller 610, a second controller 630, an unmanned mobility apparatus 640, and a manned mobility apparatus 620 to transmit and receive data.

The monitoring module 603 may receive flight data from the manned mobility apparatus 620 and the unmanned mobility apparatus 640 or the second controller 630 every 1 Hz (e.g., once per second, for real-time analysis, etc.).

The monitoring module 603 may continuously monitor whether there is abnormality in the flight data and there is a control essential area based on flight plan data obtained before the flight initiates.

If there is no abnormal condition, the processor 604 may continuously transmit and receive flight data every 1 Hz with the unmanned mobility apparatus 640 and the second controller 630 or the manned mobility apparatus 620.

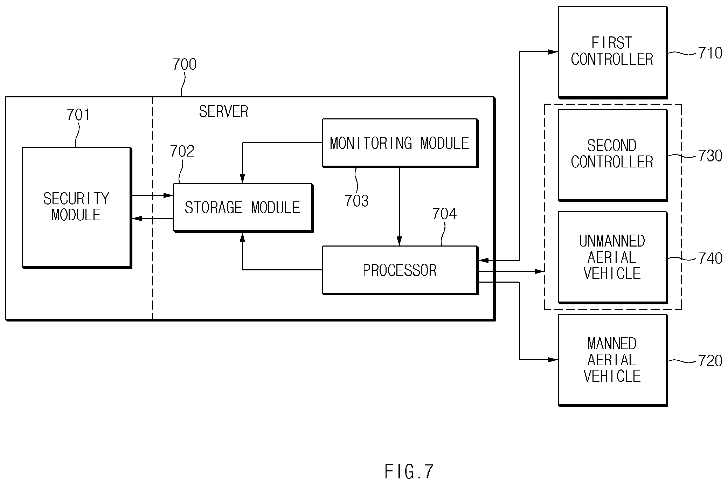

FIG. 7 shows another example of transmitting and receiving data with a controller and a mobility apparatus in a server according to an example of the present disclosure.

A server 700 may include a security module 701, a storage module 702, a monitoring module 703, and a processor 704. The server 700 may be in communication with a first controller 710, a second controller 730, an unmanned mobility apparatus 740, and a manned mobility apparatus 720 to transmit and receive data.

The monitoring module 703 may receive flight data from the manned mobility apparatus 720 and the unmanned mobility apparatus 740 or the second controller 730 every 1 Hz.

The monitoring module 703 may continuously monitor whether there is abnormality in the flight data and there is a control essential area based on flight plan data obtained before the flight begins (e.g., predefined flight corridors, altitude limits, or proximity alerts, etc.).

If abnormal condition occurs, the processor 704 may compare the abnormal condition with a manual stored in the storage module 702 based on flight plan data and flight data received from the monitoring module 703 to determine whether data for controlling the abnormal condition is included in a manual.

At this time, if the data for controlling the abnormal condition is not included in the manual, the processor 704 may request control command data from the first controller 710 or the second controller 730. The processor 704 may receive the control command data from the first controller 710 and may transmit the received control command data to the manned mobility apparatus 720. Furthermore, the processor 704 may receive the control command data from the second controller 730 and may transmit the received control command data to the unmanned mobility apparatus 740. Thereafter, if the monitoring module 703 determines that the abnormal condition has ended, the monitoring module 703 may deliver data indicating a return to a normal flight state to the processor 704.

On the other hand, if the data for controlling the anything unusual is included in the manual, the processor 704 may transmit control manual data to the manned mobility apparatus 720 or the unmanned mobility apparatus 740 depending on the manual. Furthermore, the processor 704 may request additional flight data from the manned mobility apparatus 720 or the unmanned mobility apparatus 740 depending on the manual. The processor 704 may analyze the additional flight data and may transmit control manual data corresponding to the analyzed result to the manned mobility apparatus 720 or the unmanned mobility apparatus 740. Thereafter, if it is determined in the monitoring module 703 that the abnormal condition has ended, the monitoring module 703 may deliver data indicating a return to a normal flight state to the processor 704.

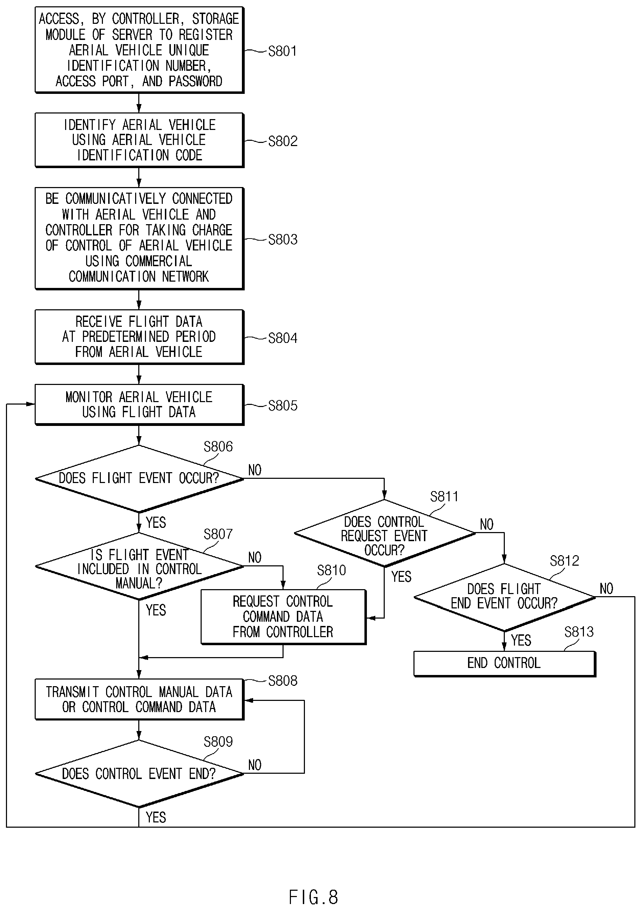

FIG. 8 shows an example of a method for managing air traffic in a server according to an example of the present disclosure.

In S801, a controller may access a storage module of a server to register a mobility apparatus unique identification number, an access port, and a password.

In S802, the server may identify a mobility apparatus using its mobility apparatus identification code.

In S803, the server may be in communication with the mobility apparatus and a controller for controlling the mobility apparatus using a commercial communication network.

In S804, the server may receive flight data at a predetermined period from the mobility apparatus.

In S805, the server may monitor the mobility apparatus using the flight data.

In S806, the server may determine whether a flight event occurs.

If the flight event occurs as a result of the determination in S806, in S807, the server may determine whether the flight event is included in a control manual.

If the flight event is included in the control manual as a result of the determination in S807, in S808, the server may transmit control manual data to the mobility apparatus.

If it is determined that the flight event has ended after transmitting the data, the server may proceed with S805 again.

On the other hand, if the flight event does not end after transmitting the data, the server may repeat S808.

If the flight event is not included in the control manual as a result of the determination in S807, then in S810, the server may request control command data from the controller. In S808, the server may transmit the received control command data to the mobility apparatus.

if the flight event does not occur as a result of the determination in S806, in S811, the server may determine whether a control request event for requesting control in the mobility apparatus occurs.

If the control request event occurs as a result of the determination in S811, then in S810, the server may request control command data from the controller. In S808, the server may transmit the received control command data to the mobility apparatus.

If a flight end event occurs as a result of the determination in S812, in S813, the server may end the control.

If the flight end event does not occur as a result of the determination in S812, the server may proceed with S805 again.

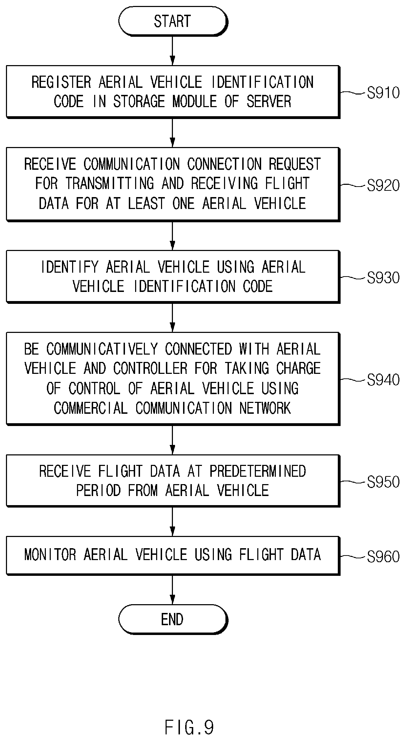

FIG. 9 shows an example of a method for managing air traffic in a server according to another example of the present disclosure.

In S910, the server may register a mobility apparatus identification code in its storage module.

In S920, the server may receive a communication connection request for transmitting and receiving flight data for at least one mobility apparatus.

In S930, the server may identify the mobility apparatus using the mobility apparatus identification code.

In S940, the server may be in communication with the mobility apparatus and a controller for controlling the mobility apparatus using a commercial communication network.

In S950, the server may receive flight data at a predetermined period from the mobility apparatus.

In S960, the server may monitor the mobility apparatus using the flight data.

Herein, the mobility apparatus may include a manned mobility apparatus and an unmanned mobility apparatus. The controller may include a first controller for controlling the manned mobility apparatus and a second controller for controlling the unmanned mobility apparatus.

The registering (S910) of the mobility apparatus identification code may include accessing, by the controller, the storage module of the server to register a mobility apparatus unique identification number, an access port, and a password.

Herein, the mobility apparatus unique identification number, the access port, and the password may be stored in a **preassigned** slot in a flight database included in the storage module of the server.

The commercial communication network may include 4G, 5G, NB-IoT, or a satellite communication network (e.g., Starlink, etc.).

The flight data may include at least one of location data, posture data, velocity data, angular velocity data, or sensing data (e.g., altitude, IMU outputs, or camera feed summaries, etc.).

The server may determine the occurrence of a flight event from the flight data and may identify whether the flight event is included in a control manual.

If the flight event is included in the control manual, the server may request additional flight data according to the control manual from the mobility apparatus.

The server may analyze the additional flight data and may transmit control manual data corresponding to the analyzed result to the mobility apparatus.

The server may determine whether the flight event has ended within a predetermined period.

If it is determined that the flight event has not ended within the predetermined period, the server may request control command data from the controller.

The server may receive the control command data from the controller and may transmit the received control command data to the mobility apparatus.

If it is determined that the flight event has ended within the predetermined period, the server may proceed with the monitoring step again.

If the flight event is not included in the control manual, the server may request control command data from the controller.

The server may receive the control command data from the controller and may transmit the received control command data to the mobility apparatus.

The server may determine whether the flight event has ended within the predetermined period.

If it is determined that the flight event has not ended within the predetermined period, the server may request additional control command data from the controller.

The server may receive the additional control command data from the controller and may transmit the received additional control command data to the mobility apparatus.

If it is determined that the flight event has ended within the predetermined period, the server may proceed with the monitoring step again.

The server may determine an occurrence of a control request event from the flight data and may request control command data from the controller.

The server may receive the control command data from the controller and may transmit the received control command data to the mobility apparatus.

The server may determine whether the control request event has ended within the predetermined period.

If it is determined that the control request event has ended within the predetermined period, the server may proceed with the monitoring step again.

The server may determine an occurrence of a flight end event from the flight data, may store all or at least some pieces of flight data received from the mobility apparatus in the storage module of the server, and may transmit a control end message to the mobility apparatus and the controller.

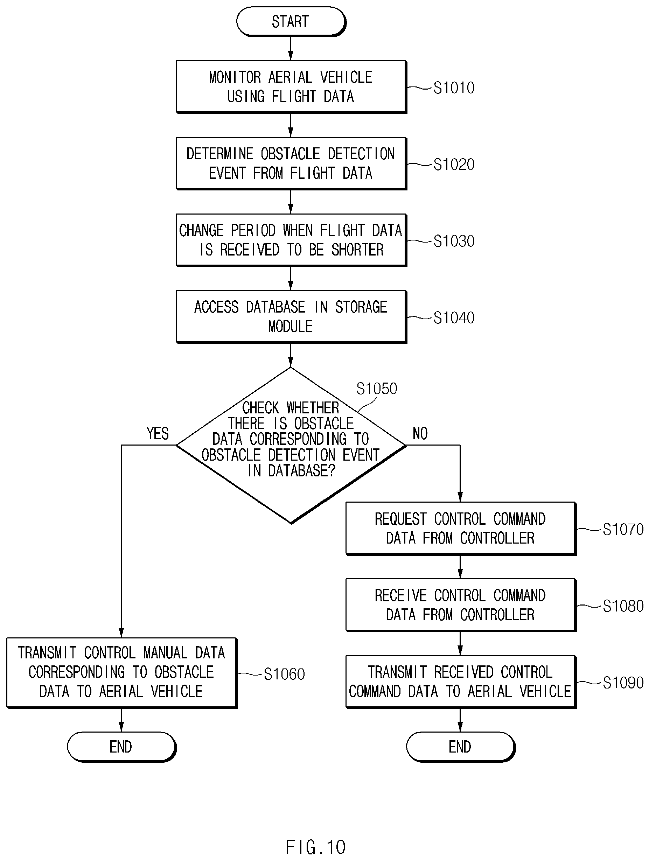

FIG. 10 shows an example of a method for managing air traffic in a server according to another example of the present disclosure.

The method for managing air traffic according to the present disclosure may include monitoring (S1010) a mobility apparatus using flight data. S1010 may be the same operation as S960 described in FIG. 9, which may be an operation performed after executing operations from S910 of FIG. 9 to S950 of FIG. 9 in the same manner.

The method for managing air traffic may include determining (S1020) an obstacle detection event from the flight data and changing (S1030) a period at which the flight data is received to be shorter (e.g., increasing frequency from 1 Hz to 10 Hz, etc.).

The method for managing air traffic may include accessing (S1040) a database in a storage module and checking (S1050) whether there is obstacle data corresponding to the obstacle detection event in the database.

The method for managing air traffic may include transmitting (S1060) control manual data corresponding to the obstacle data to the mobility apparatus, if there is matching obstacle data.

The method for managing air traffic may include reading out obstacle data via a pre-trained deep learning model stored in the storage module, if there is no obstacle data, and transmitting control manual data corresponding to the retrieved obstacle data to the mobility apparatus.

The method for managing air traffic may include requesting (S1070) control command data from the controller, if there is no obstacle data, receiving (S1080) the control command data from the controller, and transmitting (S1090) the received control command data to the mobility apparatus.

The method for managing air traffic may include establishing one-to-one communication between the mobility apparatus and the controller, if there is no obstacle data, and requesting the controller to transmit control command data corresponding to the obstacle detection event to the mobility apparatus.

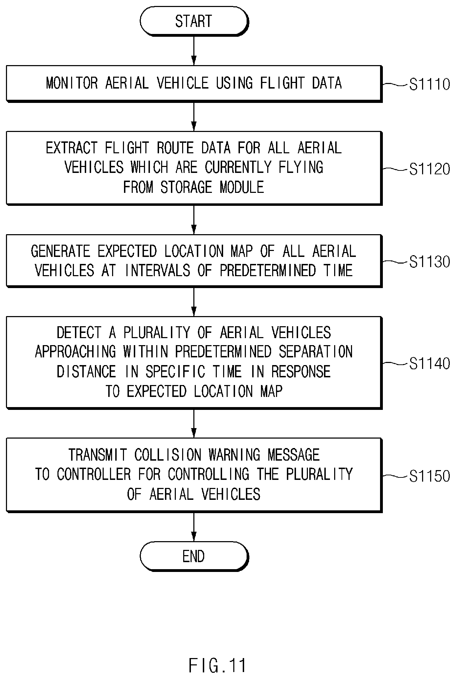

FIG. 11 shows an example of a method for managing air traffic in a server according to another example of the present disclosure.

The method for managing air traffic according to the present disclosure may include monitoring (S1110) a mobility apparatus using flight data. S1110 may be the same operation as S960 described in FIG. 9, which may be an operation performed after executing operations from S910 of FIG. 9 to S950 of FIG. 9 in the same manner.

The method for managing air traffic may include extracting (S1120) flight route data for all mobility apparatus which are currently flying from a storage module and generating (S1130) an expected location map of all the mobility apparatus at intervals of a predetermined time (e.g., every 1, 5, or 10 seconds, etc.).

The method for managing air traffic may include detecting (S1140) a plurality of mobility apparatuses approaching within a predetermined separation distance during a specific time in response to the expected location map and transmitting (S1150) a collision warning message to a controller for controlling the plurality of mobility apparatuses.

The method for managing air traffic may include detecting a mobility apparatus approaching within a predetermined distance from an obstacle during a specific time in response to the expected location map and transmitting an obstacle warning message to a controller for controlling the mobility apparatus.

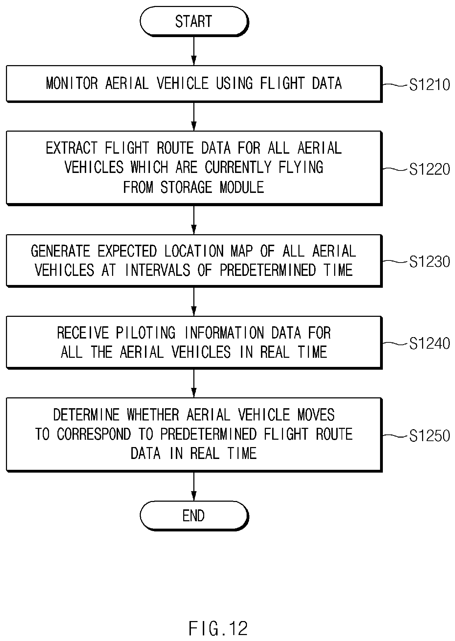

FIG. 12 shows an example of a method for managing air traffic in a server according to another example of the present disclosure.

The method for managing air traffic according to the present disclosure may include monitoring (S1210) a mobility apparatus using flight data. S1210 may be the same operation as S960 described in FIG. 9, which may be an operation performed after executing operations from S910 of FIG. 9 to S950 of FIG. 9 in the same manner.

The method for managing air traffic may include extracting (S1220) flight route data for all mobility apparatus which are currently flying from a storage module and generating (S1230) an expected location map of all the mobility apparatus at intervals of a predetermined time.

The method for managing the air traffic may include receiving (S1240) piloting information data for all the mobility apparatus in real time and determining (S1250) whether the mobility apparatus moves to correspond to predetermined flight route data in real time.

The piloting information data may include x-axis data, y-axis data, z-axis data, roll data, pitch data, and yaw data (e.g., representing position and orientation of the mobility apparatus in three-dimensional space, etc.).

The method for managing air traffic may include estimating the piloting information data, if communication connection performance with the mobility apparatus is less than a threshold (e.g., due to packet loss, signal drop, or excessive delay, etc.).

Herein, the estimating of the piloting information data may include applying an inverse dynamics algorithm based on state information data of the mobility apparatus for each time unit, which is included in the flight data, to estimate the piloting information data.

Furthermore, the estimating of the piloting information data may include estimating the piloting information data using a pre-trained deep learning model based on a type of the mobility apparatus, flight path trajectory information, and state information for each time.

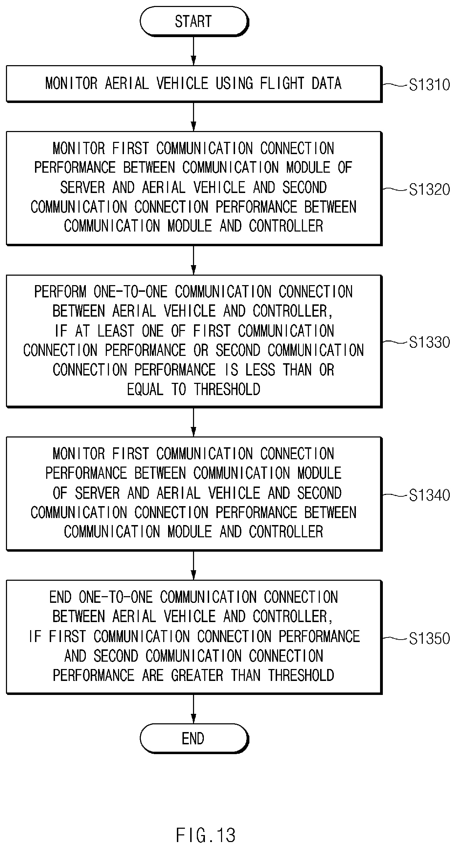

FIG. 13 shows an example of a method for managing air traffic in a server according to another example of the present disclosure.

The method for managing air traffic according to the present disclosure may include monitoring (S1310) a mobility apparatus using flight data. S1310 may be the same operation as S960 described in FIG. 9, which may be an operation performed after executing operations from S910 of FIG. 9 to S950 of FIG. 9 in the same manner.

The method for managing air traffic may include monitoring communication connection performance of the server.

Herein, the monitoring of the communication connection performance of the server may include evaluating signal availability, signal delay, and signal performance (e.g., packet loss rate or jitter, etc.).

The monitoring of the communication connection performance of the server may include monitoring (S1320) a first communication connection performance between a communication module of the server and the mobility apparatus and a second communication connection performance between the communication module of the server and a controller.

The method for managing air traffic may include performing (S1330) a one-to-one communication connection between the mobility apparatus and the controller, if at least one of the first communication connection performance or the second communication connection performance is less than or equal to a threshold.

The method for managing air traffic may include monitoring (S1340) the first communication connection performance and the second communication connection performance and ending (S1350) the one-to-one communication connection between the mobility apparatus and the controller, if the first communication connection performance and the second communication connection performance are greater than the threshold.

The method for managing air traffic may include switching the communication connection to a preliminary wireless network module to perform a continuous communication connection, if at least one of the first communication connection performance or the second communication connection performance is less than or equal to the threshold.

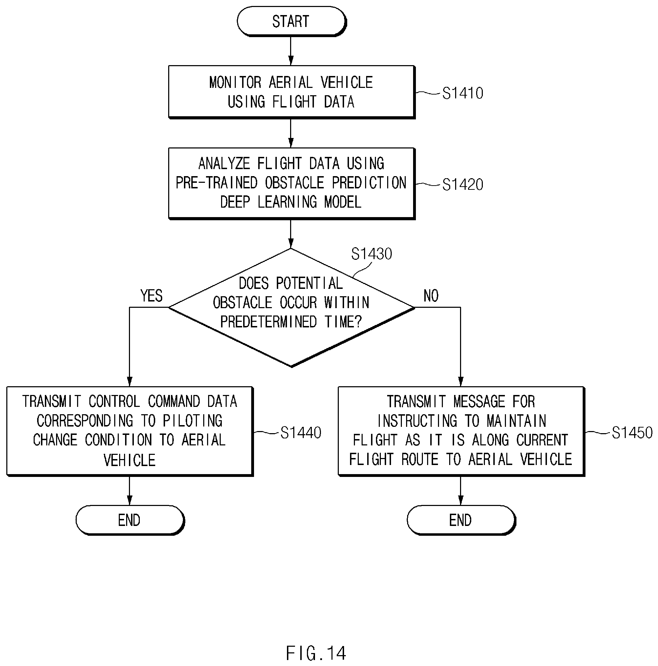

FIG. 14 shows an example of a method for managing air traffic in a server according to another example of the present disclosure.

The method for managing air traffic according to the present disclosure may include monitoring (S1410) a mobility apparatus using flight data. S1410 may be the same operation as S960 described in FIG. 9, which may be an operation performed after executing operations from S910 of FIG. 9 to S950 of FIG. 9 in the same manner.

The method for managing air traffic may include analyzing (S1420) the flight data using a pre-trained obstacle prediction deep learning model and determining (S1430) a potential obstacle occurrence event within a predetermined time (e.g., the next 2-5 seconds, etc.).

A potential obstacle may be at least one of another mobility apparatus, natural topography, or a geofence for avoiding a predictable collision on a flight route (e.g., restricted airspace or terrain features, etc.).

The method for managing air traffic may include determining whether the potential obstacle occurrence event corresponds to a piloting change condition.

The method for managing air traffic may include transmitting (S1440) control command data corresponding to the piloting change condition to the mobility apparatus, if the potential obstacle occurrence event corresponds to the piloting change condition.

the control command data corresponding to the piloting change condition may include changed flight route data (e.g., an updated trajectory, avoidance vector, or speed limit adjustment, etc.).

The method for managing air traffic may include transmitting (S1450) a message for instructing to maintain flight along the current flight route to the mobility apparatus, if the potential obstacle occurrence event does not correspond to the piloting change condition, and then proceeding with monitoring of the mobility apparatus.

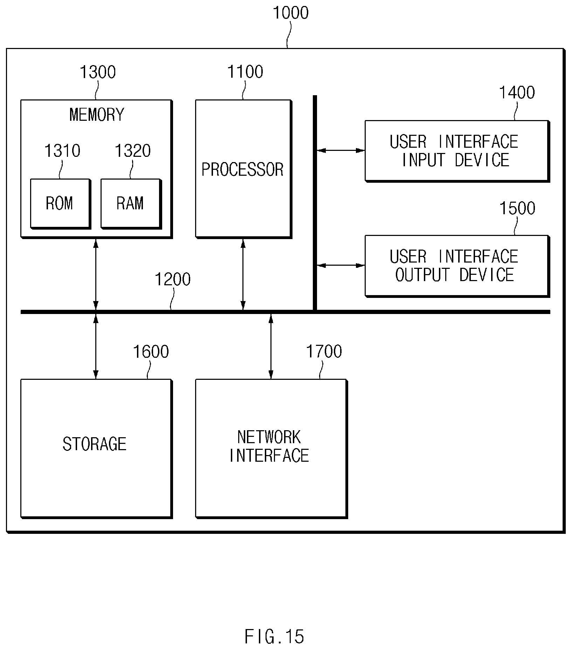

FIG. 15 shows an example computing system (e.g., a computing device of mobility apparatuses or any other apparatus). A computing system 1000 may include at least one processor 1100, memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random-access memory (RAM).

Communication interface(s) (also referred to as communication device(s), communicator(s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communications channels. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example embodiment(s) disclosed in the specification may be directly implemented with a hardware module, a software module, or a combination of the hardware module and the software module, which is executed by the processor 1100. The software module may reside on a storage medium (e.g., the memory 1300 and/or the storage 1600) such as RAM, a flash memory, ROM, an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

An example of the present disclosure provides a method for managing air traffic to connect a mobility apparatus, a controller for controlling the mobility apparatus, and a server over a commercial communication network and monitor a flight status of the mobility apparatus.

Another example of the present disclosure provides a method for managing air traffic to transmit control data to a mobility apparatus based on a manual in a server, if a specific event occurs in the mobility apparatus via flight data.

The technical problems to be solved by the present disclosure are not limited to the aforementioned problems, and any other technical problems not mentioned herein will be clearly understood from the following description by those skilled in the art to which the present disclosure pertains.

According to an example of the present disclosure, a server may include a communication module in communication with a mobility apparatus and a controller using a commercial communication network, a storage module that registers a mobility apparatus identification code obtained from the controller, and a processor that analyzes data received from the mobility apparatus and the controller to generate control data. The processor may receive a communication connection request for transmitting and receiving flight data for at least one mobility apparatus, may identify the mobility apparatus using the mobility apparatus identification code, may be in communication with the mobility apparatus and a controller for controlling the mobility apparatus using the commercial communication network, may receive the flight data at a predetermined period from the mobility apparatus, and may monitor the mobility apparatus using the flight data.

According to an example, the processor may determine occurrence of a flight event from the flight data and identify whether the flight event is included in a control manual.

According to an example, the processor may request additional flight data according to the control manual from the mobility apparatus, if the flight event is included in the control manual.

According to an example, the processor may analyze the additional flight data and may transmit control manual data corresponding to the analyzed result to the mobility apparatus.

According to an example, the processor may request control command data from the controller, if the flight event is not included in the control manual.

According to an example, the processor may receive the control command data from the controller and may transmit the received control command data to the mobility apparatus.

According to an example, the processor may determine occurrence of a control request event from the flight data and may request control command data from the controller.

According to an example, the processor may receive the control command data from the controller and may transmit the received control command data to the mobility apparatus.

According to an example, the processor may determine occurrence of a flight end event from the flight data and may store all pieces of flight data received from the mobility apparatus in the storage module of the server and may transmit a control end message to the mobility apparatus and the controller.

According to an example, the processor may extract flight route data for all mobility apparatus which are currently flying from the storage module and may generate an expected location map of all the mobility apparatus at intervals of a predetermined time.

According to an example, the processor may detect a plurality of mobility apparatuses approaching within a predetermined separation distance in a specific time in response to the expected location map and may transmit a collision warning message to a controller for controlling the plurality of mobility apparatuses.

According to an example, the processor may detect a mobility apparatus approaching within a predetermined distance from an obstacle in a specific time in response to the expected location map and may transmit an obstacle warning message to a controller for controlling the mobility apparatus.

According to another example of the present disclosure, a method for managing air traffic may include registering an mobility apparatus identification code in a storage module of the server, receiving a communication connection request for transmitting and receiving flight data for at least one mobility apparatus, identifying the mobility apparatus using the mobility apparatus identification code, in communication within the mobility apparatus, a controller for controlling the mobility apparatus, and the server using the commercial communication network, receiving flight data at a predetermined period from the mobility apparatus, and monitoring the mobility apparatus using the flight data.

According to an example, the method may further include determining occurrence of a flight event from the flight data and identifying whether the flight event is included in a control manual.

According to an example, the method may further include request additional flight data according to the control manual from the mobility apparatus, if the flight event is included in the control manual.

According to an example, the method may further include analyzing the additional flight data and transmitting control manual data corresponding to the analyzed result to the mobility apparatus.

According to an example, the method may further include requesting control command data from the controller, if the flight event is not included in the control manual.

According to an example, the method may further include receiving the control command data from the controller and transmitting the received control command data to the mobility apparatus.

According to an example, the method may further include determining occurrence of a control request event from the flight data and requesting control command data from the controller.

According to an example, the method may further include receiving the control command data from the controller and transmitting the received control command data to the mobility apparatus.

According to an example, the method may further include determining occurrence of a flight end event from the flight data, storing all pieces of flight data received from the mobility apparatus in the storage module of the server, and transmitting a control end message to the mobility apparatus and the controller.

According to an example, the method may further include extracting flight route data for all mobility apparatus which are currently flying from the storage module and generating an expected location map of all the mobility apparatus at intervals of a predetermined time.

According to an example, the method may further include detecting a plurality of mobility apparatuses approaching within a predetermined separation distance in a specific time in response to the expected location map and transmitting a collision warning message to a controller for controlling the plurality of mobility apparatuses.

According to an example, the method may further include detecting a mobility apparatus approaching within a predetermined distance from an obstacle in a specific time in response to the expected location map and transmitting an obstacle warning message to a controller for controlling the mobility apparatus.

The present technology may provide the method for managing the air traffic to connect a mobility apparatus, a controller for controlling the mobility apparatus, and a server over a commercial communication network and monitor a flight status of the mobility apparatus.

Furthermore, the present technology may provide the method for managing the air traffic to transmit control data to the mobility apparatus based on a manual in the server, if a specific event occurs in the mobility apparatus via flight data.

In addition, various effects ascertained directly or indirectly through the present disclosure may be provided.

Hereinabove, although the present disclosure has been described with reference to examples and the accompanying drawings, the present disclosure is not limited thereto, but may be variously modified and altered by those skilled in the art to which the present disclosure pertains without departing from the spirit and scope of the present disclosure claimed in the following claims.

Therefore, examples of the present disclosure are not intended to limit the technical spirit of the present disclosure, but provided only for the illustrative purpose. The scope of the present disclosure should be construed on the basis of the accompanying claims, and all the technical ideas within the scope equivalent to the claims should be included in the scope of the present disclosure.

## Claims

1. A server comprising:
a communication circuit configured to communicate with a mobility apparatus and an external computing device configured to control the mobility apparatus via a wireless communication network;
a memory configured to register a mobility apparatus identification code obtained from the external computing device; and
a processor circuit configured to:
process data received from the mobility apparatus and the external computing device to generate control data,
receive a communication connection request for transmitting and receiving flight data for at least one mobility apparatus,
identify, based on the mobility apparatus identification code, the mobility apparatus,
establish communication with the mobility apparatus and the external computing device to enable control of the mobility apparatus via the wireless communication network,
receive flight data from the mobility apparatus at a predetermined period, and
monitor, based on the received flight data, the mobility apparatus.

2. The server of claim 1, wherein the processor circuit is configured to:
determine an occurrence of a flight event from the flight data, and
identify whether the flight event is included in a control manual.

3. The server of claim 2, wherein the processor circuit is configured to:
based on the flight event being included in the control manual, request additional flight data from the mobility apparatus.

4. The server of claim 3, wherein the processor circuit is configured to:
process the additional flight data, and
transmit, based on the processed additional flight data, control manual data to the mobility apparatus.

5. The server of anyone of claims 2-4, wherein the processor circuit is configured to:
based on the flight event not being included in the control manual, request control command data from the external computing device.

6. The server of anyone of claims 1-5, wherein the processor circuit is configured to:
receive the control command data from the external computing device, and
transmit the received control command data to the mobility apparatus.

7. The server of anyone of claims 1-6, wherein the processor circuit is configured to:
determine an occurrence of a control request event from the flight data, and
request, based on the determined occurrence of the control request event, control command data from the external computing device.

8. The server of anyone of claims 1-7, wherein the processor circuit is configured to:
receive the control command data from the external computing device, and
transmit the received control command data to the mobility apparatus.

9. The server of anyone of claims 1-8, wherein the processor circuit is configured to:
determine an occurrence of a flight end event from the flight data and store the flight data in the memory of the server; and
transmit, based on the determined occurrence of the flight end event, a control end message to the mobility apparatus and the external computing device.

10. The server of anyone of claims 1-9, wherein the processor circuit is configured to:
extract, from the memory, flight route data for a plurality of mobility apparatuses that are currently flying, and
generate an expected location map of the plurality of mobility apparatuses at predetermined time periods.

11. The server of claim 10, wherein the processor circuit is configured to:
based on the expected location map, detect that the plurality of mobility apparatuses are approaching within a predetermined separation distance in a specific time period, and
transmit a collision warning message to the external computing device for controlling the plurality of mobility apparatuses.

12. The server of claim 10 or 11, wherein the processor circuit is configured to:
based on the expected location map, detect that one mobility apparatus of the plurality of mobility apparatuses is approaching within a predetermined distance from an obstacle in a specific time period, and
transmit an obstacle warning message to the external computing device for controlling the one mobility apparatus.

13. A method performed by a server, the method comprising:
registering, in a memory of the server, a mobility apparatus identification code obtained from an external computing device;
receiving a communication connection request for transmitting and receiving flight data for at least one mobility apparatus;
identifying, based on the mobility apparatus identification code, the mobility apparatus;
establishing communication between the server, the mobility apparatus, and the external computing device via a wireless communication network to enable control of the mobility apparatus;
receiving flight data from the mobility apparatus at a predetermined period; and
monitoring, based on the received flight data, the mobility apparatus.

14. The method of claim 13, further comprising:
determining an occurrence of a flight event from the flight data; and
identifying whether the flight event is included in a control manual based on the flight event being included in the control manual, requesting additional flight data from the mobility apparatus processing the additional flight data; and
transmitting, based on the processed additional flight data, control manual data to the mobility apparatus.

15. A mobility apparatus comprising:
a processor; and
a memory storing at least one instruction that, when executed by the processor communicating with the memory, is configured to cause the mobility apparatus to:
establish communication with a server and an external computing device via a wireless communication network,
generate flight data associated with operation of the mobility apparatus,
transmit the flight data to the server at a predetermined interval,
receive control data from the server, wherein the control data is generated based on the transmitted flight data and additional flight data from at least one other mobility apparatus,
adjust, based on the received control data, at least one operational parameter of the mobility apparatus, and
control, based on the adjusted at least one operational parameter, a flight operation of the mobility apparatus.
